# EUROPÄISCHE PATENTANMELDUNG

(11) **EP 2 146 103 A2**
(43) Veröffentlichungstag der Anmeldung: **20.01.2010**
(21) Anmeldenummer: 09007930.2
(22) Anmeldetag: 17.06.2009
(51) Int. Cl.: F16B 13/06

(54) **Spreizanker**

(30) Priorität: 19.07.2008 DE 102008033838
(71) Anmelder: fischerwerke GmbH & Co. KG, 72178 Waldachtal (DE)
(72) Erfinder: Hengesbach, Wolfgang, 72280 Dornstetten (DE); Suchy, Ulrich, 72250 Freudenstadt (DE)

(57) **Zusammenfassung**

Die Erfindung betrifft einen Verbundanker (1) mit einer einen Spreizbereich (13) und einen Lastangriffsbereich (4) aufweisenden Ankerstange (2), wobei die Ankerstange (2) einen Schaftbereich (13) zwischen Spreizbereich (8) und Lastangriffsbereich (4) aufweist. Um einen derartigen Verbundanker (1) zu schaffen, der einen geringen Materialeinsatz bei sehr gutem Tragverhalten aufweist, schlägt die Erfindung vor, dass der Schaftbereich (13) Ausnehmungen (16) aufweist, die in Längsrichtung des Schaftbereichs (13) verlaufen.

## Beschreibung

Die Erfindung betrifft einen Verbundanker mit den Merkmalen des Oberbegriffs des Anspruchs 1.

Zur Befestigung von Gegenständen an einem Untergrund sind so genannte chemische Verankerungen bekannt. Dabei wird ein Verbundanker mit einer Ankerstange in ein Bohrloch im Untergrund eingesteckt, in das zuvor, gleichzeitig oder hinterher, eine aushärtbare Masse eingebracht wurde. Durch das Aushärten der Masse ist die Ankerstange fest im Bohrloch verankert. Der Gegenstand kann an der Ankerstange befestigt werden. Als einfache Ankerstangen werden häufig Gewindestangen eingesetzt. Sie werden so weit in das Bohrloch eingebracht, dass sie noch aus dem Bohrloch herausragen. So kann beispielsweise ein zu befestigender Gegenstand mit einer Durchgangsbohrung über die Ankestange gestülpt und mit einer Mutter festgezogen werden.

Insbesondere für die Zugzone in Betonkörpern, beispielsweise an der Unterseite von Decken und Brücken, kommt es zu Rissbildungen, die leicht zum Versagen von Verbundankern in Form von Gewindestangen führen. Aus dem Stand der Technik sind daher Ankerstangen mit einem Spreizbereich und einem Lastangriffsbereich in Form eines Außengewindes bekannt. Der Spreizbereich besteht zumeist aus einem oder mehreren Abschnitten, in denen sich der Querschnitt in Einbringrichtung erweitert. Bekannte Ankerstangen weisen beispielsweise mehrere hintereinander angeordnete Konen auf. Im Falle einer Rissbildung im Untergrund und der ausgehärteten Masse kann der Verbundanker durch eine Axialverschiebung nachspreizen.

Aus der Druckschrift DE 10129441 A1 ist ein derartiger Verbundanker bekannt. Die Druckschrift schlägt zum Aufreißen der Mörtelschale bei einer axialen Verschiebung der Ankerstange ein Mehrkantprofil in einem Schaftbereich zwischen Spreizbereich und Lastangriffsbereich vor.

Der Erfindung liegt die Aufgabe zu Grunde, derartige Verbundanker zu schaffen, die mit weniger Material gleiche oder höhere Tragwerte erreichen.

Diese Aufgabe wird erfindungsgemäß durch die Merkmale des Anspruchs 1 gelöst. Die Erfindung schlägt vor, dass der Verbundanker eine Ankerstange mit einem Schaftbereich zwischen einem Spreizbereich und einem Lastangriffsbereich aufweist, und dass der Schaftbereich Ausnehmungen aufweist, die insbesondere im Wesentlichen in Längsrichtung des Schaftbereichs verlaufen. Der Lastangriffsbereich ist insbesondere als Außengewinde ausgebildet. Statt einem Außengewinde kann der Lastangriffsbereich beispielsweise auch einen Haken, einen tellerförmigen Kopf oder ein Innengewinde aufweisen. Die Ankerstange ist insbesondere einstückig, kann aber auch mehrteilig ausgeführt sein. Mit dem Begriff "Ausnehmung" ist eine konkave Form gemeint, beispielsweise im Gegensatz zu einem Mehrkantprofil. Dabei schließt der Begriff "konkav" sowohl runde als auch eckige Geometrien ein. Die Ausnehmungen können beispielsweise nutartig sein, aber auch bohrungsartig. Derartige Geometrien haben den Vorteil, dass sie sowohl spanend als auch umformtechnisch einfach herzustellen sind. Im einfachsten Fall weist die Ankerstange mindestens zwei, insbesondere drei oder vier Ausnehmungen auf.

Die erfindungsgemäße Gestaltung der Ankerstange mit Ausnehmungen ergibt sich aus folgenden Überlegungen:

Die auf die Ankerstange durch den befestigten Gegenstand wirkenden Kräfte können in axial wirkende Zug- beziehungsweise Druckkräfte und Querkräfte unterschieden werden, wobei häufig eine Kombination beider Belastungsarten auftritt. Für die axialen Kräfte ist in der Regel die kleinste Querschnittsfläche zwischen dem Spreizbereich und dem Lastangriffsbereich bestimmend. Meist liegt diese kleinste Querschnittfläche unmittelbar angrenzend an den Spreizbereich. Die Querkräfte werden in einem Bereich zwischen dem Lastangriffsbereich und dem Spreizbereich über die ausgehärtete Masse zur Bohrlochwand abgetragen. Dabei wird allgemein davon ausgegangen, dass die Querkräfte im Bereich des Bohrlochmundes und darüber hinaus über eine gewisse Länge entlang der Bohrlochwand übertragen werden. Dies hängt vor allem damit zusammen, dass weder die Ankerstange noch die ausgehärtete Masse und der Untergrund ideal steif sind, sondern sich zumindest geringförmig verformen. Entsprechend wirkt eine sich über die Länge der Ankerstange verändernde Biegebelastung. Bei allgemeinen bauaufsichtlichen Zulassungen des Deutschen Instituts für Bautechnik wird beispielsweise davon ausgegangen, dass das maximale Biegemoment in einer Bohrlochtiefe entsprechend dem Nenndurchmesser des Ankers wirkt und sich von dort aus in Richtung des Bohrlochgrundes über eine Länge entsprechend dem Vierfachen des Nenndurchmessers abbaut.

Die Erfindung schlägt vor, den Querschnitt den kritischen Zugkräften und Biegemomenten anzupassen. Für die Zugkräfte ist die genannte minimale Querschnittsfläche ausschlaggebend, während für das Biegemoment das entsprechende Widerstandsmoment entscheidend ist. Aus der genannten Druckschrift ist es bekannt, die Querschnittsfläche im Schaftbereich im Wesentlichen konisch in Richtung des Spreizbereichs zu reduzieren, allerdings weniger vor dem Hintergrund eines gezielt abnehmenden Widerstandsmoments, sondern um eine gute Ablösung von der umgebenden Masse für ein gutes Nachspreizverhalten zu gewährleisten. Ein noch besseres Verhältnis zwischen Querschnittsfläche und Widerstandsmoment beziehungsweise Materialeinsatz und Tragfähigkeit ergibt sich jedoch, wenn im Schaftbereich Ausnehmungen vorgesehen werden. Gegenüber bekannten Spreizankern kann es erforderlich sein, dass der Durchmesser des den Querschnitt umschreibenden Kreises größer wird. Die Querschnittsfläche selbst verringert sich jedoch bei gleicher Belastbarkeit. Insbesondere vor dem Hintergrund steigender Stahlpreise ergibt sich hieraus ein Kostenvorteil gegenüber bekannten Verbundankern.

Grundsätzlich gilt, dass das Verhältnis von Materialeinsatz zu Widerstandsmoment besser wird, je tiefer und schmaler die Ausnehmungen sind. Dieses Verhältnis wird außerdem vorzugsweise dadurch optimiert, dass die Ausnehmungen im Wesentlichen in Längsrichtung der Ankerstange verlaufen. Sie können aber auch beispielsweise wendelförmig, insbesondere mit sehr großer Steigung, verlaufen, um die Ankerstange beispielsweise in Bezug auf zusätzlich auftretende Torsionsmomente, also Momente um die Längsachse, zu verbesseren.

Vorzugsweise bilden die Ausnehmungen keine Spreizflächen, sie haben also keine Flächenanteile, die bei Einsatz im Bohrloch in Richtung des Bohrlochmundes geneigt sind, wie dies im Spreizbereich der Fall ist. Dies hat den Vorteil, dass der Schaftbereich nicht zur Eintragung der Zugkräfte beiträgt, sondern diese tief im Bohrloch auf den Untergrund übertragen werden. Hierdurch ist die Tragfähigkeit des Verbundankers verbessert.

In einer bevorzugten Ausführungsform weist die Ankerstange Rippen auf, die insbesondere im Wesentlichen in Längsrichtung verlaufen. Die Rippen können abgerundet oder mit einer oder mehreren Kanten versehen werden. Sie können in Längsrichtung in mehrere Rippensegmente aufgeteilt sein und sie können, entsprechend den Ausführungen zu Ausnehmungen, auch wendelförmig angeordnet sein.

Vorzugsweise ist die Ankerstange kaltmassiv umgeformt aus Metall hergestellt. Gegenüber einer spanenden Herstellung ergibt sich hieraus eine kostengünstige Massenproduktion mit geringem Materialeinsatz und sehr guten Festigkeitswerten.

Die Erfindung wird nachfolgend anhand eines Ausführungsbeispiels erläutert.

Es zeigen:

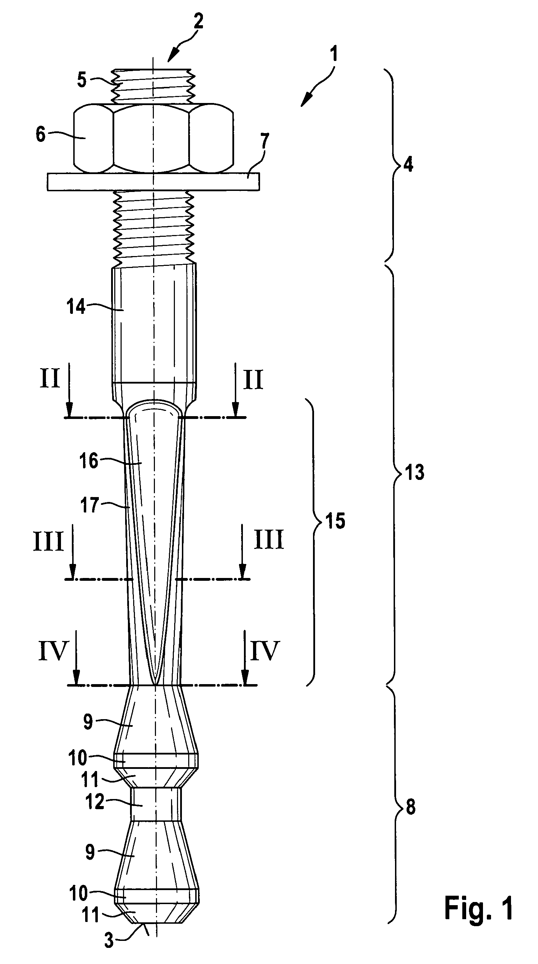

- Figur 1: den erfindungsgemäßen Verbundanker ohne Mutter und Unterlegscheibe in einer Seitenansicht; und
- Figur 2 bis 4: Querschnitte entsprechend der Pfeile II bis IV in Figur 1.

Der in den Figuren gezeigte Verbundanker 1 aus Stahl dient der Befestigung eines nicht dargestellten Gegenstands an einem ebenfalls nicht dargestellten Untergrund. Er besteht aus einer lang gestreckten Ankerstange 2 mit einem einbringseitigen Ende 3 und einem Lastangriffsbereich 4 in Form eines Außengewindes 5 am entgegengesetzten Ende. Auf das Außengewinde 5 ist eine Mutter 6 aufgeschraubt. An die Mutter 6 schließt sich in Einbringrichtung eine Unterlegscheibe 7 an. Am einbringseitigen Ende 3 bildet die Ankerstange 2 einen Spreizbereich 8. Der Spreizbereich 8 weist zwei Spreizkonen 9 auf, die derart angeordnet sind, dass sich der Querschnitt der Ankerstange 2 in diesem Bereich in Einbringrichtung erweitert. Kurze Zylinderabschnitte 10 schließen sich jeweils in Einbringrichtung an die Spreizkonen 9 an, und hieran wiederum Gegenkonen 11, die den Querschnitt wieder auf den ursprünglichen Durchmesser verjüngen. Die beiden Teilbereiche aus Spreizkonus 9, Zylinderabschnitt 10 und Gegenkonus 11 sind durch einen zylindrischen Halsabschnitt 12 verbunden.

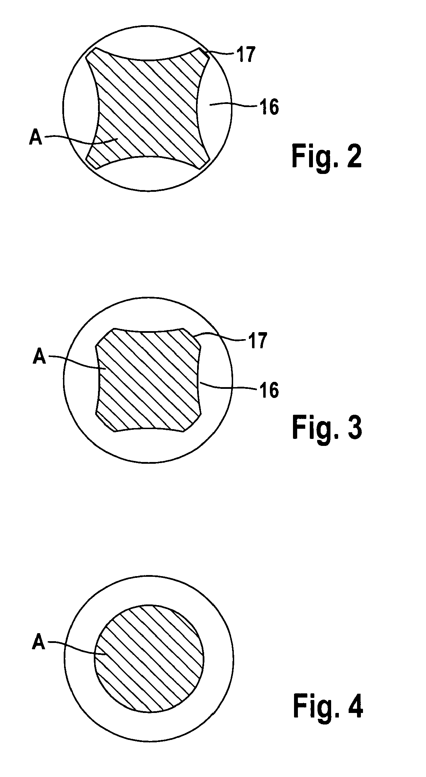

Spreizbereich 8 und Lastangriffsbereich 4 sind durch einen Schaftbereich 13 verbunden. Dieser unterteilt sich in einen zylindrischen Schaftabschnitt 14, der sich unmittelbar an den Lastangriffsbereich 4 anschließt und diesem im Durchmesser ungefähr entspricht. An den zylindrischen Schaftabschnitt 14 schließt sich ein konischer Schaftabschnitt 15 an, wo sich der Querschnitt zum ersten Spreizkonus 9 des Spreizbereichs 8 hin verjüngt. Der Querschnitt des konischen Schaftabschnitts 15 ist dabei nicht rein konisch im Sinne eines durchgehend kreisförmigen Querschnitts, sondern er weist vier gleichmäßig über den Umfang verteilte Ausnehmungen 16 auf, zwischen denen der verbleibende Querschnitt längs verlaufende Rippen 17 bildet. Wie aus den Figuren 2 und 3 deutlich wird, haben die Ausnehmungen 16 selbst einen Querschnitt in Form von Kreissegmenten, die mit ihrem Umfang radial zur Mittelachse der Ankerstange 2 weisen. Die Grundlinien der Ausnehmungen 16, also die Summe der jeweils nächsten Punkte zur Mittellinie, verlaufen im Wesentlichen parallel zur Mittellinie, so dass die Fläche der Ausnehmungen 16 in Richtung des Spreizbereichs 8 hin bis auf Null abnimmt. Zum zylindrischen Schaftabschnitt 14 hin laufen die Grundlinien 18 in einem Kreisbogen radial nach außen aus. Auf diese Weise können die Ausnehmungen 16 einfach mit einem Kugelfräser spanend erstellt oder mit einem entsprechend geformten Werkzeug kaltmassiv umgeformt werden.

Zur Verankerung mit dem Verbundanker 1 wird zunächst ein Bohrloch in einem Untergrund erstellt und eine aushärtbare Masse in das Bohrloch eingebracht (nicht dargestellt). Die aushärtbare Masse kann injiziert werden oder in Form einer Patrone eingeführt werden. Außerdem wird die Ankerstange 2 in das Bohrloch eingeschoben, so dass sich die aushärtbare Masse um die Ankerstange 2 verteilt und diese im Spreizbereich 8 und im Schaftbereich 13 umgibt. Nach dem Aushärten der Masse kann die Mutter 6 gegen einen zuvor aufgesetzten Gegenstand (nicht dargestellt) angezogen werden. Die Zugkräfte durch das Anziehen der Mutter 6 und die Lasten des befestigten Gegenstands werden über den Spreizbereich 8 in die ausgehärtete Masse eingeleitet. Aufgrund von Rissen im Untergrund kann es zu einer Bohrlochaufweitung und zu einem Reißen der Masse kommen. In diesem Fall löst sich die Ankerstange 2 über die gesamte Länge von der ausgehärteten Masse, was durch eine Beschichtung der Ankerstange 2 begünstigt sein kann. Die Ankerstange 2 verschiebt sich axial und findet durch die Spreizkonen 9 wieder Halt, weshalb von einem Nachspreizen gesprochen wird. Da die Ausnehmungen 16 in Bezug auf Zugkräfte keine Hinterschneidung bilden, tragen sie nicht zur Einleitung dieser Kräfte in den Untergrund bei. Dies ist beabsichtigt, da die Kräfte möglichst tief im Untergrund eingeleitet werden sollen, um die Tragfähigkeit des Untergrunds optimal auszunutzen. Quer zur Längsachse der Ankestange 2 wirkende Kräfte werden im Schaftbereich 13 in die ausgehärtete Masse eingeleitet. Das in der Ankerstange 2 wirkende Biegemoment ist im zylindrischen Schaftabschnitt 14 maximal und zwar etwa in einer Bohrlochtiefe die dem Durchmesser des zylindrischen Schaftabschnitts 14 entspricht, also abhängig von der genauen Setztiefe der Ankerstange 2. Die Querkrafttragfähigkeit wird daher in diesem Bereich von der Querschnittsfläche bestimmt. Von dort aus nimmt das Biegemoment auf Null über eine Länge ab, die etwa dem Vierfachen des Durchmessers des zylindrischen Schaftabschnitts 14 entspricht. Entsprechend kann das Widerstandsmoment gegen Biegung abnehmen. Die Ausnehmungen 16 und die Rippen 17 sorgen dabei im Gegensatz zu einem rein kreisförmigen Querschnitt für ein besonders hohes Widerstandsmoment bei geringer Querschnittsfläche, also bei geringem Materialeinsatz. Insbesondere bei einer kaltmassiv umgeformten Ankerstange 2 kann damit bei deutlich geringerem Stahlverbrauch bzw. geringeren Kosten das gleiche Tragverhalten erreicht werden.

### Bezugszeichenliste

### Verbundanker

- 1: Verbundanker
- 2: Ankerstange
- 3: einbringseitiges Ende
- 4: Lastangriffsbereich
- 5: Außengewinde
- 6: Mutter
- 7: Unterlegscheibe
- 8: Spreizbereich
- 9: Spreizkonus
- 10: Zylinderabschnitt
- 11: Gegenkonus
- 12: Halsabschnitt
- 13: Schaftbereich
- 14: zylindrischer Schaftabschnitt
- 15: konischer Schaftabschnitt
- 16: Ausnehmung
- 17: Rippe

## Patentansprüche

1. Verbundanker (1) mit einer einen Spreizbereich (13) und einen Lastangriffsbereich (4) aufweisenden Ankerstange (2), wobei die Ankerstange (2) einen Schaftbereich (13) zwischen Spreizbereich (8) und Lastangriffsbereich (4) mit einem zumindest abschnittweise nicht-kreisförmigen Querschnitt aufweist, **dadurch gekennzeichnet, dass** der Schaftbereich (13) Ausnehmungen (16) aufweist, die insbesondere im Wesentlichen in Längsrichtung des Schaftbereichs (13) verlaufen.

2. Verbundanker nach Anspruch 1, **dadurch gekennzeichnet, dass** Ausnehmungen (16) keine Spreizflächen bilden.

3. Verbundanker nach Anspruch 1, **dadurch gekennzeichnet, dass** der Schaftbereich (13) Rippen (17) aufweist, die insbesondere im Wesentlichen in Längsrichtung verlaufen.

4. Verbundanker nach Anspruch 1, **dadurch gekennzeichnet, dass** die Ankerstange (2) kaltmassiv umgeformt aus Metall hergestellt ist.
